(19) Europäisches Patentamt / European Patent Office / Office européen des brevets

(11) **EP 2 045 166 B1**

(12) **FASCICULE DE BREVET EUROPEEN**

(45) Date de publication et mention
de la délivrance du brevet:
**26.05.2010 Bulletin 2010/21**

(51) Int Cl.:
*B62D 5/04* *(2006.01)*     *B62D 6/00* *(2006.01)*
*B62D 7/22* *(2006.01)*     *B60K 23/04* *(2006.01)*
*B60W 10/20* *(2006.01)*    *B60W 10/12* *(2006.01)*

(21) Numéro de dépôt: **08305594.7**

(22) Date de dépôt: **25.09.2008**

(54) **Dispositif d'assistance de direction d'un véhicule automobile**

Hilfskraftlenkvorrichtung eines Kraftfahrzeugs

Power steering device for an automobile

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **01.10.2007 FR 0757989**

(43) Date de publication de la demande:
**08.04.2009 Bulletin 2009/15**

(73) Titulaire: **Renault S.A.S.**
**92100 Boulogne-Billancourt (FR)**

(72) Inventeurs:
• **Planelles, Mickael**
**78114, Magny Les Hameaux (FR)**
• **Debernard, Eric**
**78960, Voisins (FR)**
• **Meyrignac, Jean-Guillaume**
**92380, Garches (FR)**
• **Portaz, Christophe**
**78220, Viroflay (FR)**

(56) Documents cités:
**EP-A- 1 234 746      EP-A- 1 659 385
WO-A-2007/103915   DE-A1- 19 954 131
GB-A- 2 359 794**

## Description

L'invention concerne le domaine des dispositifs d'assistance de direction pour véhicule automobile.

Les véhicules équipés d'une direction assistée comprennent généralement un moteur d'assistance exerçant un effort d'assistance s'ajoutant à l'effort exercé directement par le volant de direction. Les deux efforts déplacent une crémaillère de direction vers la droite ou vers la gauche et un système de biellettes transforme ce mouvement de la crémaillère en mouvement de braquage des deux roues directrices.

Généralement, les roues sont montées en rotation d'enroulement autour d'un porte-fusée. Le porte-fusée est mobile en rotation de braquage autour d'un axe sensiblement vertical ainsi que sensiblement parallèle au plan du pneumatique de la roue. Toutefois, l'axe de braquage du porte-fusée peut être légèrement incliné pour réduire la distance entre l'axe du porte-fusée et le point de contact du pneumatique avec la route.

Dans les véhicules à traction avant ou à quatre roues motrices, les roues directrices sont soumises à un couple d'entraînement issu du moteur et éventuellement à un couple de freinage. Dans le cas d'un véhicule à propulsion, les roues directrices ne sont pas motrices mais sont quand même soumises à un couple de freinage. Dans tous les cas, les roues directrices sont soumises à un couple d'enroulement, qu'il s'agisse d'un couple moteur et/ou d'un couple de freinage.

Le document WO 2007/103915 A décrit un dispositif selon le préambule de la revendication 1.

Lorsque le véhicule traverse une zone où l'adhérence sur la route d'un des pneumatiques varie par rapport à l'adhérence de l'autre pneumatique, l'effort exercé dans l'axe du véhicule par une roue sur son porte-fusée diffère de celui exercé par l'autre roue. En fonction des accélérations auxquels est soumis le véhicule, le barycentre des efforts exercés par la route sur le pneumatique ne coïncide pas avec l'axe de braquage du porte-fusée. Cela se traduit par un effort sur la crémaillère de direction qui est ressenti par le conducteur. Si cet effort perturbateur n'est pas compensé, le véhicule est dévié. Ce phénomène informe le conducteur sur l'adhérence de la route. Dans certains cas, ces informations peuvent être utiles au conducteur et dans d'autres, elles peuvent le surprendre et provoquer un accident. Dans tous les cas, il se pose un problème de rapidité de réaction pour éviter une déviation non souhaitée du véhicule.

L'invention propose un dispositif d'assistance de direction d'un véhicule automobile qui remédie aux problèmes précédents et en particulier qui permet une réaction rapide aux variations d'adhérence des roues directrices.

Selon un mode de réalisation, un dispositif d'assistance de direction pour une paire de roues directrices d'un véhicule automobile comprend un moteur d'assistance et deux chaînes cinématiques reliant le moteur d'assistance à chacune des roues directrices. Le moteur d'assistance exerce un effort d'assistance sur chaque chaîne cinématique. Il comprend deux capteurs d'efforts transmis situés sur chacune des chaînes cinématiques et un calculateur d'assistance de direction relié aux deux capteurs et apte à calculer une consigne de correction de l'effort d'assistance en fonction des efforts transmis mesurés.

Les efforts transmis par chacune des deux chaînes cinématiques dépendent directement de l'adhérence du pneumatique correspondant sur la route. La mesure des efforts transmis donne une information, dès l'apparition de la cause des perturbations avant que ces perturbations ne se traduisent par un déplacement effectif de la crémaillère de direction et ne provoquent un angle de braquage non désiré des pneumatiques. Une consigne de correction des efforts d'assistance peut être envoyée au moteur d'assistance dès l'apparition de la cause du phénomène. La consigne peut supprimer complètement ou incomplètement la perturbation selon ce qui est désiré. Grâce au capteur d'efforts, la réaction à la perturbation est rapide. La réaction est notamment plus rapide que lorsque la perturbation est détectée par des capteurs de déplacement, par exemple.

Avantageusement, chacune des chaînes cinématiques comprend au moins deux portions rigides reliées par une articulation élastique, chacun des capteurs d'efforts étant situé entre la roue correspondante et l'articulation élastique. Des articulations élastiques sont souvent utilisées pour filtrer les perturbations remontant au volant. Ces élasticités ont comme effets secondaires que les variations d'efforts sont transmises mécaniquement, avec un retard, à la crémaillère de direction. Le fait que le capteur d'efforts soit situé entre la roue directrice et au moins l'une des élasticités, permet d'anticiper encore plus la réaction à la perturbation. En effet, le temps de réponse du capteur d'efforts transmis, du calculateur de la consigne de correction et du moteur d'assistance peut être plus rapide ou synchronisé avec la propagation mécanique de la perturbation le long de la ou des élasticités de la chaîne cinématique jusqu'à la crémaillère de direction.

Avantageusement, au moins un capteur d'efforts transmis comprend un palier à roulement situé entre une roue et un porte-fusée de ladite roue. Le fait de mesurer les efforts transmis directement entre la roue et le porte-fusée permet de cumuler toutes les élasticités éventuelles le long de la chaîne cinématique et permet une synchronisation de la correction de l'assistance avec l'effet de la perturbation.

Avantageusement, le palier à roulement présente deux chemins de roulement. Le capteur d'efforts transmis correspondant est capable de mesurer au moins les efforts ($F_x$, $F_y$) exercés sur le porte-fusée dans un plan parallèle à la route, ainsi qu'un couple ($M_z$) s'opposant au braquage de la roue correspondante.

Avantageusement, le palier comprend des moyens pour mesurer le torseur des efforts ($F_x$, $F_y$, $F_z$, $M_x$, $M_y$, $M_z$) exercés par la roue sur le porte-fusée.

Le fait de mesurer tout le torseur des efforts entre la roue et le porte-fusée permet de disposer dans le calculateur d'assistance de la totalité des effets de la route sur le véhicule. Le calculateur d'assistance peut calculer la consigne de correction de l'assistance de direction en fonction d'une cartographie d'état du véhicule intégrant par exemple la vitesse en cours du véhicule, l'accélération du moteur ou l'angle de braquage en cours.

Avantageusement, le calculateur comprend une cartographie mémorisée du comportement dynamique des deux chaînes cinématiques et du moteur d'assistance et comprend des moyens de synchronisation de la consigne de correction d'efforts d'assistance pour que l'effet de ladite consigne sur le volant de direction du véhicule soit en phase avec l'effet sur le volant de la variation d'efforts transmis

Avantageusement, le capteur d'efforts transmis est apte à mesurer des efforts ($F_x$, $F_z$) exercés dans le plan de la roue correspondante, au contact de la roue avec le sol lors du déplacement et un couple d'enroulement résistant ($M_y$).

D'autres caractéristiques et avantages de l'invention apparaîtront à la lecture de la description détaillée de quelques modes de réalisation pris à titre d'exemples non limitatifs et illustrés par les dessins annexés, sur lesquels :

- la figure 1 est une illustration schématique en vue de devant d'une partie d'un train de roues motrices et directrices d'un véhicule ;
- la figure 2 est une illustration en vue de dessus du même train de roue en position de braquage ; et
- la figure 3 est une illustration de différents blocs de calcul pouvant être utilisés par des systèmes de gestion d'adhérence selon l'invention.

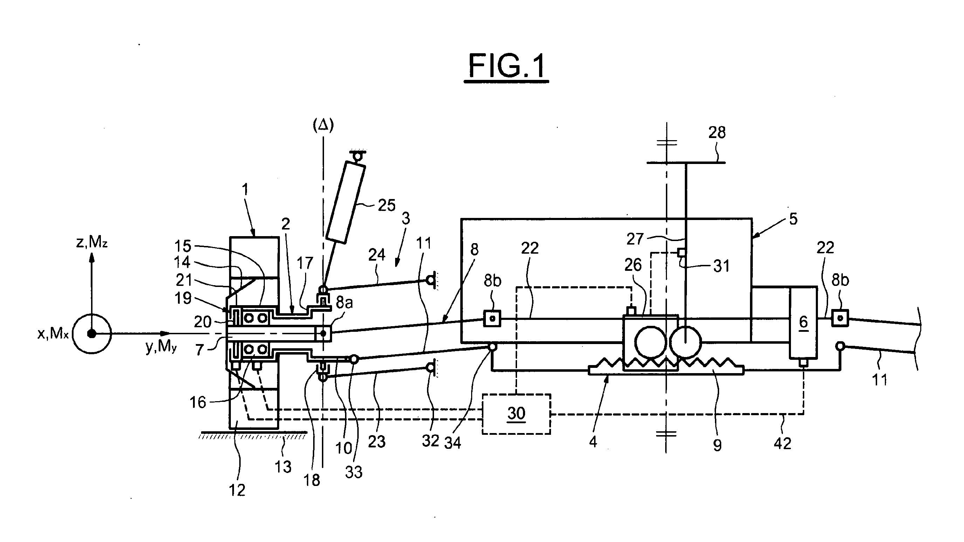

La figure 1 illustre une roue de droite 1 du véhicule. En effet, dans le système d'axes illustré, X correspond à l'axe principal du véhicule et est orienté de l'arrière vers l'avant du véhicule, Y correspond à une direction horizontale et est orienté dans l'axe de rotation de la roue 1 vers l'intérieur du véhicule, et Z est la direction verticale ascendante.

Les couples ou les angles de pivotement de la roue 1 autour de l'axe Z sont appelés couples ou angles de braquage ; les couples ou angles de pivotement de la roue autour de l'axe Y sont appelés des couples ou des angles d'enroulement ; les couples ou angles de pivotement de la roue autour de l'axe X sont appelés des couples ou angles de carrossage.

Le train de roues comprend, outre la roue de droite 1 mobile autour de l'axe Y et un porte-fusée 2 mobile autour d'un axe Δ sensiblement vertical. Un système de suspension 3, un mécanisme de direction 4 et un groupe motopropulseur 5 sont également représentés. Le groupe motopropulseur 5 comprend un différentiel 6 relié à un arbre d'entraînement 7 de la roue 1 par un système de cardan 8. Le mécanisme de direction 4 comprend une crémaillère de direction 9 reliée à un bras de levier 10 du porte-fusée 2 par un système de biellettes 11.

La roue 1 comprend un pneumatique 12 destiné à être en contact avec le sol 13 et une jante 14 fixée sur l'arbre d'entraînement 7. Le porte-fusée 2 comprend un moyeu horizontal 15 recevant un palier 16 à deux chemins de roulement monté à rotation sur l'arbre d'entraînement 7. Le porte-fusée 2 comprend également une portion sensiblement verticale 17 montée à rotation dans un corps de suspension 18 de manière à être libre en rotation autour de l'axe Δ, lorsque le système de biellettes 11 agit sur le bras de levier 10.

La roue droite est également équipée d'un système de freinage 19 comprenant par exemple un disque 20 solidaire de l'arbre d'entraînement 7 et des mâchoires 21 solidaires du porte-fusée 2. Le système de cardan 8 comprend un premier demi-cardan 8a situé à l'intersection de l'axe de l'arbre d'entraînement 7 et de l'axe de braquage Δ. Le système de cardan 8 comprend également un deuxième demi-cardan 8b situé sur une partie d'un arbre de transmission solidaire du différentiel 6.

Le corps de suspension 18 est relié par un triangle de suspension supérieur 24 et un triangle de suspension inférieur 23 au châssis du véhicule de manière que le corps de suspension 18 soit mobile verticalement le long de l'axe de braquage Δ. Un amortisseur 25 permet d'amortir le débattement du corps de suspension 18.

La crémaillère 9 est reliée à chacune des roues 1 par une chaîne cinématique qui comprennent successivement chacune : la biellette 11 reliée à la crémaillère 9 par une articulation 34, puis le bras de levier 10 relié à la biellette 11 par une articulation élastique 33, puis le porte-fusée 2 fixe par rapport au bras et relié élastiquement au châssis par le corps de suspension 18 et les triangles de suspension. Les chaînes cinématiques comprennent également le palier 16 et l'arbre 7 fixé à la roue 1.

Le palier à roulement 16 est un palier à deux chemins de roulement équipé de deux séries de jauges de contrainte. La disposition de ces jauges de contrainte ainsi que la manière dont les informations tirées de ces jauges de contrainte sont échantillonnées et traitées, sont décrites dans la demande de brevet français FR 2 869 966 (SNR Roulements) à laquelle on pourra se référer pour plus de précisions. Est notamment décrit la manière de déterminer, à partir des jauges de contrainte, le torseur des efforts exercés par la bague intérieure du roulement sur la bague extérieure.

Un tel palier est utilisé pour déterminer le torseur des efforts exercés par le sol 13 sur le pneumatique 12. Le pneumatique 12 est en effet en contact sur le sol 13 par toute une surface dont chaque point subit des efforts d'intensité et de direction différents d'un point à l'autre. La résultante des efforts comprend une force Fz destinée à compenser le poids du véhicule, une force Fy destinée à compenser par exemple la force centrifuge lorsque le véhicule tourne et un effort Fx s'opposant à l'accélération ou au freinage du véhicule. Le contact entre le sol 13 et le pneumatique 12 exerce également un couple Mx qui tend à maintenir le plan de la roue 1 sensiblement vertical et à s'opposer à un pivotement de carrossage ; un couple My dû à la déformation dissymétrique d'une partie avant et d'une partie arrière du pneumatique, et qui s'oppose à une rotation d'enroulement de la roue 1 ; et un couple Mz qui s'oppose au braquage de la roue 1 autour de l'axe Δ. Les efforts transmis par les chaînes cinématiques correspondent principalement à Fx, Fy et My.

On va maintenant décrire le mécanisme de direction 4. Celui-ci comprend, outre la crémaillère 9, un moteur d'assistance 26 et une colonne de direction 27 reliée au volant de direction 28 actionné directement par le conducteur. Dans l'exemple illustré, la colonne 27 comprend un engrenage coopérant avec la crémaillère 9 et le moteur d'assistance 26 engrène avec la crémaillère 9 de manière parallèle à la colonne 27. Ainsi, l'entraînement de la crémaillère 9 est le cumul du couple exercé par le conducteur sur le volant 28 et du couple généré par le moteur d'assistance 26. Des systèmes d'amortissement des vibrations non représentés peuvent être intercalés entre la colonne de direction 27 et le volant 28.

Dans une variante, le moteur d'assistance 26 est intégré le long de la colonne de direction 27 ou bien situé en extrémité de la colonne de direction 27 de sorte les couples exercés par le conducteur et par le moteur d'assistance 26 sont combinés avant le système d'engrenage avec la crémaillère 9.

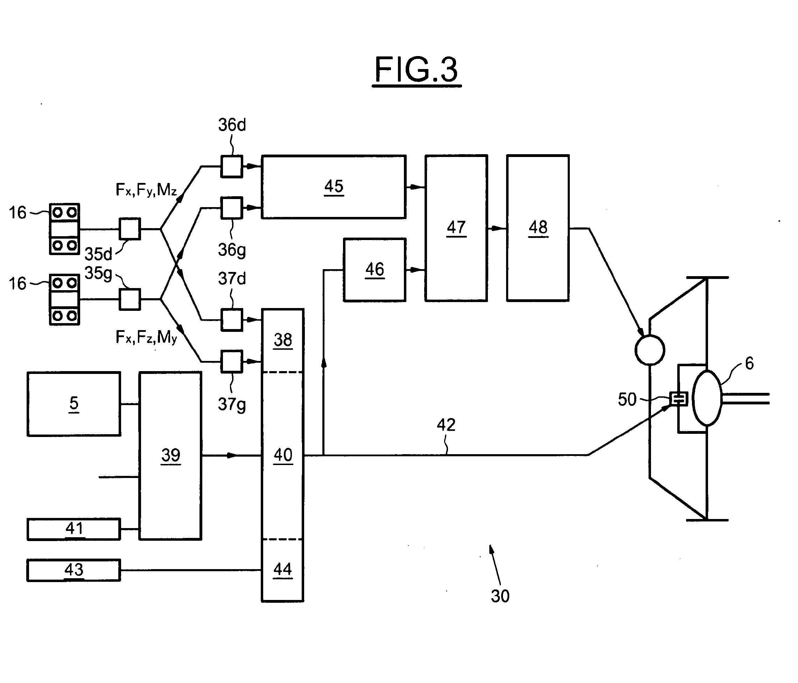

Le différentiel 6 est du type différentiel piloté. Ce différentiel comprend une couronne, non représentée, reliée au groupe motopropulseur et deux sorties reliées aux arbres de transmission 22 de chacune des roues. Ce type de différentiel comprend également un dispositif 50 de blocage ou de couplage entre les deux arbres de transmission des deux roues, illustré en figure 3. Le dispositif 50 est actionné selon une consigne de pilotage du différentiel.

Un calculateur 30 illustré en pointillés sur la figure 1 est relié au différentiel 6 de manière à communiquer au différentiel le taux de couplage à exécuter. Le calculateur 30 est également relié au moteur d'assistance 26 de manière à communiquer une correction d'assistance à ajouter ou retrancher au couple d'assistance qu'aurait généré le moteur d'assistance 26 s'il n'avait été relié qu'à un capteur d'angle 31 situé sur la colonne de direction 27. Le calculateur 30 est également relié au palier 16 et peut contribuer à la détermination du torseur précédemment décrit. Le calculateur 30 est également relié au dispositif de freinage ainsi qu'au groupe motopropulseur 5.

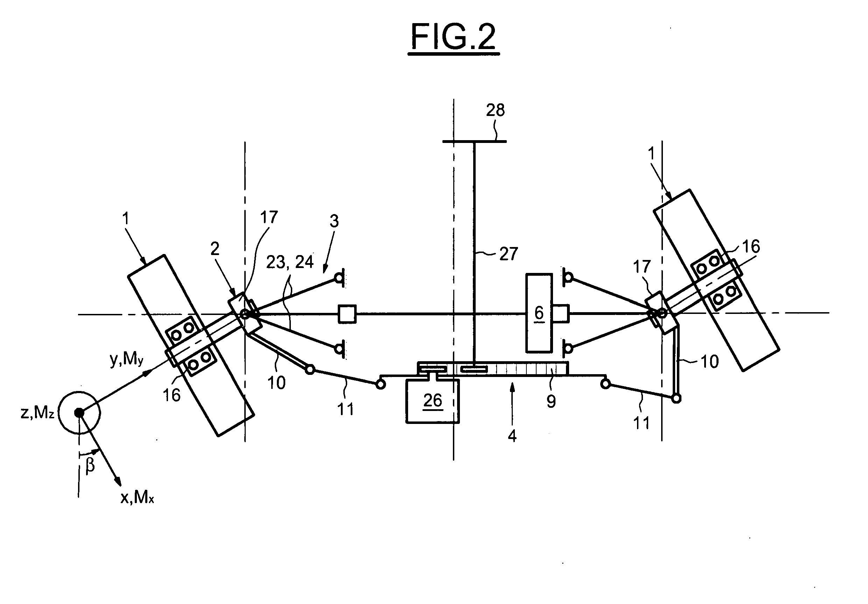

Sur la figure 2, est illustrée la forme triangulaire des triangles de suspension 23 et 24. De plus, la crémaillère 9 est illustrée en position de braquage de manière à pousser ou tirer les bras de levier 10 afin que chacune des roues (1,1) tournent d'un même angle de braquage β. Le porte-fusée 2 étant flottant verticalement, les vibrations générées soit par le moteur 5, soit par le sol 13, sont transmises à la fois par des articulations 32 des triangles de suspension 23 et 24, par des articulations 33 du bras de levier 10 avec les biellettes 11 et par des articulations 34 des biellettes 11 avec la crémaillère 9 (voir figure 1). Pour limiter une partie des vibrations, notamment de haute fréquence, les articulations 32, 33 et 34 peuvent comprendre des éléments élastiques et/ou des éléments amortisseurs. Une perturbation engendrée par le sol 13 sur la roue 1 se propage le long du mécanisme de direction 4 jusqu'au volant 28. Les éléments d'élasticité et/ou d'amortissement contribuent à réduire l'intensité de ces perturbations et introduisent également un retard dans la propagation du couple de perturbation.

On va à l'aide de la figure 3, décrire différents modes de réalisation de l'invention selon que certaines parties des blocs de calcul qui y sont illustrés sont utilisées ou non. Le calculateur 30 comprend un moyen de recombinaison 35d du torseur exercé sur le palier 16 de la roue de droite et un moyen de recombinaison 35g du torseur exercé sur le palier 16 de la roue de gauche. Le mode de fonctionnement des moyens de recombinaison 35d et 35g est décrit dans la demande FR 2 869 966 et est connu de l'homme du métier.

Le calculateur comprend également des moyens de filtrage 36d et 36g correspondant aux deux roues et concernant la partie des torseurs ayant une incidence sur le braquage des roues. Il s'agit en particulier du filtrage des efforts Fx, Fy et Mz. Le calculateur comprend également des moyens de filtrage 37d et 37g correspondant pour chacune des deux roues au filtrage des efforts ayant une incidence sur l'enroulement des roues. Il s'agit notamment du filtrage des efforts Fx, Fz et My.

Le calculateur comprend des moyens de calcul 38 des couples d'enroulement résistants Cr de la roue droite et de la roue gauche. Ces couples sont quasiment égaux, au filtrage près, à Myd et à Myg mesurés. Le calculateur comprend une cartographie 39 de la valeur du couple moteur en fonction des paramètres d'état du groupe motopropulseur 5. Ces paramètres peuvent comprendre la température du bloc moteur, la vitesse du vilebrequin, la position d'une pédale d'accélérateur 51, le rapport de transmission, la pression d'alimentation des freins, les requêtes de modification du freinage et/ou de l'injection par les systèmes de type ASR, ABS ou ESP. La cartographie mémorisée permet d'établir la correspondance entre l'ensemble de ces paramètres et la valeur du couple moteur entraînant la couronne de différentiel, et/ou la valeur des couples de freinage exercés sur chacune des roues motrices.

Dans une partie 40 du calculateur, est calculé le couple d'enroulement moteur nominal pour chacune des roues, qui correspond à la moitié du couple moteur Cm entraînant la couronne de différentiel, diminué pour chacune des roues du couple de freinage Cf correspondant. Si l'on ramène l'accélération du véhicule à l'accélération angulaire Ω" pour la roue considérée, les différents couples sont liés par l'équation suivante :

$$C_m / 2 + C_r + C_f = I_{roue} \bullet \Omega''$$

Il s'en suit que lorsque la requête de couple moteur Cm/2 devient supérieure au couple résistant Cr admissible par le contact entre le pneumatique 12 et le sol 13, il devient nécessaire de bloquer le différentiel 6. Le calculateur comprend un seuil de décrochement mémorisé et un moyen de comparaison entre la différence entre les couples d'enroulement moteur nominaux Cm/2 et résistants Cr pour chacune des roues avec le seuil de décrochement. Le moyen de comparaison permet de déterminer le taux de couplage 42 du différentiel 6 de manière à transférer le couple moteur depuis la roue pour laquelle le couple résistant du contact pneu-sol est faible vers la roue motrice pour laquelle ledit couple résistant est élevé.

Grâce à la mesure directe du couple d'enroulement résistant dû au contact pneu-sol de chacune des roues, il est possible d'agir sur le couple moteur entraînant ladite roue avant que ce couple moteur ne fasse glisser ou patiner la roue. Toutefois, le seuil de décrochement peut être variable en fonction de l'état dynamique du véhicule, en effet, lorsque le véhicule est en ligne droite, un léger glissement peut être toléré, de même lorsque le véhicule est en manoeuvre, avec une vitesse très faible et des accélérations pouvant localement entraîner le glissement de la roue, un léger glissement est toléré. En revanche, à vitesse élevée ou bien dans des tournants, le seuil de décrochement enregistré permet d'agir avant que n'ait lieu un glissement. Une partie 44 du calculateur permet de limiter la consigne 42 de taux de couplage en fonction de reçu ou calculer par une partie 43 du calculateur.

On va maintenant décrire la partie du calculateur concernant l'assistance de direction. Une partie 45 reçoit les informations Fx, Fy et Mz des moyens de filtrage 36d et 36g. La partie 45 est munie d'une cartographie mémorisée qui comprend des paramètres définissant la géométrie du train de roues et du mécanisme de direction. La partie 45 calcule un « couple de remontée d'effort » correspondant à la résultante des effets sur la direction des efforts Fx, Fy et Mz de chacune des deux roues. Si la cartographie mémorisée est suffisamment précise, le couple de remontée d'effort calculé correspond sensiblement aux efforts réels transmis par le système de biellettes 11.

Une partie 46 du calculateur calcule, non pas la totalité des efforts remontés par le système de biellettes 11, mais uniquement la partie de remontée d'efforts supplémentaire qui est due au couplage du différentiel 6. La partie 46 comprend une cartographie mémorisée des efforts supplémentaires engendrés par le taux de couplage 42.

Une partie 47 du calculateur comprend une cartographie qui définit une stratégie de filtrage des remontées d'effort à compenser par le mécanisme d'assistance en fonction de l'état dynamique du véhicule. Ainsi selon les cas, il pourra être décidé de compenser uniquement le couple de remontée d'efforts calculé par la partie 46 ou bien la totalité du couple de remontée d'efforts calculée par la partie 45 ou bien une combinaison des deux.

Enfin, une partie 48 du calculateur permet de synchroniser la consigne de correction d'assistance générée par le calculateur en direction du moteur d'assistance avec l'effet sur la crémaillère de direction 9 des efforts mesurés par les roulements 16 une fois que ces efforts se sont propagés mécaniquement le long du système de biellettes 11. La partie 48 du calculateur 30 génère une consigne pour le moteur d'assistance 26 qui cumule le couple d'assistance nécessaire pour obtenir le braquage souhaité des roues, en l'absence de couple de perturbation, et le couple de correction d'assistance compensant une partie des remontées d'efforts.

## Revendications

1. Dispositif d'assistance de direction pour une paire de roues directrices (1) d'un véhicule automobile comprenant un moteur d'assistance (26) et deux chaînes cinématiques (9-11-10-16-7) reliant le moteur d'assistance à chacune des roues directrices (1); le moteur d'assistance (26) exerçant un effort d'assistance sur chaque chaîne cinématique (9), le dispositif comprenant deux capteurs d'efforts transmis (16) situés sur chacune des chaînes cinématiques (9-11-10-16-7) et un calculateur (30) d'assistance de direction relié aux deux capteurs (16) et apte à calculer une consigne de correction de l'effort d'assistance en fonction des efforts transmis mesurés, **caractérisé par le fait que** chacune des chaînes cinématiques (9-11-10-16-7) comprend au moins deux portions rigides (10, 11) reliées par une articulation élastique (33), chacun des capteurs d'efforts (16) étant situé entre la roue (1) correspondante et l'articulation élastique (33).

2. Dispositif selon la revendication 1, dans lequel au moins un capteur d'efforts transmis (16) comprend un palier (16) à roulement situé entre une roue (1) et un porte-fusée (2) de ladite roue.

3. Dispositif selon la revendication 2, dans lequel le palier (16) à roulement présente deux chemins de roulement, le capteur d'efforts transmis (16) correspondant étant capable de mesurer au moins les efforts ($F_x$, $F_y$) exercés sur le porte-fusée (2) dans un plan parallèle à la route (13), ainsi qu'un couple ($M_z$) s'opposant au braquage de la roue (1) correspondante.

4. Dispositif selon la revendication 3, dans lequel le palier comprend des moyens pour mesurer le torseur des efforts ($F_x$, $F_y$, $F_z$, $M_x$, $M_y$, $M_z$) exercés par la roue (1) sur le porte-fusée (2).

**5.** Dispositif selon l'une quelconque des revendications précédentes, dans lequel le calculateur (36) comprend une cartographie (48) mémorisée du comportement dynamique des deux chaînes cinématiques et du moteur d'assistance et comprend des moyens de synchronisation (48) de la consigne de correction d'efforts d'assistance pour que l'effet de ladite consigne sur le volant de direction (28) du véhicule soit en phase avec l'effet sur le volant (28) de la variation d'efforts transmis

**6.** Dispositif selon une des revendications 2 ou 3, dans lequel le capteur d'efforts transmis est apte à mesurer des efforts ($F_x$, $F_z$) exercés dans le plan de la roue correspondante, au contact de la roue (1) avec le sol (13) lors du déplacement et un couple d'enroulement résistant ($M_y$).

**Claims**

**1.** Power steering device for a pair of steered wheels (1) of a motor vehicle comprising a power assistance motor (26) and two mechanisms (9-11-10-16-7) connecting the power assistance motor to each of the steered wheels (1) ; the power assistance motor (26) exerting a power assistance force on each mechanism (9), the device comprising two transmitted-force sensors (16) situated on each of the mechanisms (9-11-10-16-7) and a power steering computer (30) connected to both sensors (16) and capable of calculating a correction value for the power assistance force as a function of the measured transmitted forces, which device is **characterized in that** each of the mechanisms (9-11-10-16-7) comprises at least two rigid portions (10, 11) connected by an elastic joint (33), each of the force sensors (16) being situated between the corresponding wheel (1) and the elastic joint (33).

**2.** Device according to Claim 1, in which at least one transmitted-force sensor (16) comprises a rolling-element bearing (16) situated between a wheel (1) and a stub axle (2) of said wheel.

**3.** Device according to Claim 2, in which the rolling-element bearing (16) has two raceways, with the corresponding transmitted-force sensor (16) being capable of measuring at least the forces ($F_x$, $F_y$) exerted on the stub axle (2) in a plane parallel to the road (13), and a torque ($M_z$) opposing the steering of the corresponding wheel (1).

**4.** Device according to Claim 3, in which the bearing comprises means for measuring the wrench of the forces ($F_x$, $F_y$, $F_z$, $M_x$, $M_y$, $M_z$) exerted by the wheel (1) on the stub axle (2).

**5.** Device according to any one of the preceding claims, in which the computer (30) comprises a stored map (39) of the dynamic behaviour of the two mechanisms and of the power assistance motor and comprises means (48) for synchronizing the correction value for the power assistance forces so that the effect of said correction value on the vehicle steering wheel (28) is in phase with the effect on the steering wheel (28) of the variation of transmitted forces.

**6.** Device according to either of Claims 2 and 3, in which the transmitted-force sensor is capable of measuring forces ($F_x$, $F_z$) exerted in the plane of the corresponding wheel, at the contact of the wheel (1) with the ground (13) during the movement and a resistant winding torque ($M_y$).

**Patentansprüche**

**1.** Lenkhilfevorrichtung für ein Paar von gelenkten Rädern (1) eines Kraftfahrzeugs, die einen Hilfsmotor (26) und zwei kinematische Ketten (9-11-10-16-7) enthält, die den Hilfsmotor mit jedem der gelenkten Räder (1) verbinden; wobei der Hilfsmotor (26) auf jede kinematische Kette (9) eine Hilfskraft ausübt, wobei die Vorrichtung zwei Sensoren (16) von übertragenen Kräften, die sich auf jeder der kinematischen Ketten (9-11-10-16-7) befinden, und einen Lenkhilferechner (30) enthält, der mit den zwei Sensoren (16) verbunden und fähig ist, einen Korrektursollwert der Hilfskraft in Abhängigkeit von den gemessenen übertragenen Kräften zu berechnen, **dadurch gekennzeichnet, dass** jede der kinematischen Ketten (9-11-10-16-7) mindestens zwei starre Abschnitte (10, 11) enthält, die über ein elastisches Gelenk (33) verbunden sind, wobei jeder der Kräftesensoren (16) sich zwischen dem entsprechenden Rad (1) und dem elastischen Gelenk (33) befindet.

**2.** Vorrichtung nach Anspruch 1, bei der mindestens ein Sensor (16) von übertragenen Kräften ein Wälzlager (16) enthält, das sich zwischen einem Rad (1) und einem Achsschenkelträger (2) des Rads befindet.

**3.** Vorrichtung nach Anspruch 2, bei der das Wälzlager (16) zwei Wälzwege aufweist, wobei der entsprechende Sensor (16) für übertragene Kräfte mindestens die auf den Achsschenkelträger (2) in einer Ebene parallel zur Straße (13) ausgeübten Kräfte ($F_x$, $F_y$) sowie ein Drehmoment ($M_z$) messen kann, das dem Lenkeinschlag des entsprechenden Rads (1) entgegenwirkt.

**4.** Vorrichtung nach Anspruch 3, bei der das Lager Einrichtungen enthält, um die Dyname der Kräfte ($F_x$, $F_y$, $F_z$, $M_x$, $M_y$, $M_z$) zu messen, die vom Rad (1) auf den Achsschenkelträger (2) ausgeübt werden.

5. Vorrichtung nach einem der vorhergehenden Ansprüche, bei der der Rechner (30) eine gespeicherte Kartographie (39) des dynamischen Verhaltens der zwei kinematischen Ketten und des Hilfsmotors und Einrichtungen (48) zur Synchronisation des Korrektorsollwerts von Hilfskräften enthält, damit die Wirkung des Sollwerts auf das Lenkrad (28) des Fahrzeugs mit der Wirkung der Veränderung übertragener Kräfte auf das Lenkrad (28) in Phase ist.

6. Vorrichtung nach einem der Ansprüche 2 oder 3, bei der der Sensor von übertragenen Kräften Kräfte ($F_x$, $F_z$), die in der Ebene des entsprechenden Rads bei Kontakt des Rads (1) mit dem Boden (13) während der Fahrt ausgeübt werden, und ein Roll-Widerstandsmoment ($M_y$) messen kann.

FIG.1

# FIG.2

EP 2 045 166 B1

# FIG.3

EP 2 045 166 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007103915 A

- FR 2869966